# EUROPÄISCHE PATENTSCHRIFT

(11) **EP 1 202 891 B1**
(45) Veröffentlichungstag und Bekanntmachung des Hinweises auf die Patenterteilung: **10.05.2006**
(21) Anmeldenummer: 00951454.8
(22) Anmeldetag: 26.07.2000
(51) Int. Cl.: B60T 13/569

(54) **PNEUMATISCHER BREMSKRAFTVERSTÄRKER UND VERFAHREN ZU DESSEN HERSTELLUNG**
PNEUMATIC BRAKE BOOSTER AND METHOD FOR THE PRODUCTION THEREOF
SERVOFREIN PNEUMATIQUE ET PROCEDE PERMETTANT DE LE PRODUIRE

(30) Priorität: 10.08.1999 DE 19937769
(43) Veröffentlichungstag der Anmeldung: 08.05.2002
(73) Patentinhaber: LUCAS INDUSTRIES public limited company, Solihull B90 4LA (GB)
(72) Erfinder: SCHLÜTER, Peter, D-56206 Kammerforst (DE)
(74) Vertreter: Beyer, Andreas
(86) Internationale Anmeldenummer: PCT/EP2000/007202
(87) Internationale Veröffentlichungsnummer: WO 2001/010694

(56) Entgegenhaltungen:
- DE-A- 3 007 532
- DE-A- 3 111 188
- US-A- 4 348 944
- US-A- 4 821 623
- US-A- 5 277 100

## Beschreibung

Die Erfindung betrifft einen pneumatischen Bremskraftverstärker, insbesondere für Kraftfahrzeuge, gemäß dem Oberbegriff des Patentanspruchs 1, und ein Verfahren zu dessen Herstellung gemäß dem Oberbegriff des Patentanspruchs 3.

Pneumatische Bremskraftverstärker dieser Art sind bekannt, beispielsweise aus der DE 44 08 993 A1. Sie werden millionenfach in Kraftfahrzeugen verwendet und dienen dazu, die von einem Fahrer in die Fahrzeugbremsanlage eingeleitete Fußkraft zu verstärken und auf einen Hauptzylinder zu übertragen, um in diesem ein Hydraulikfluid unter Druck zu setzen. Der so erzeugte Hydraulikdruck wird den Fahrzeugbremsen zugeleitet und presst dort Reibelemente gegen ein sich drehendes, abzubremsendes Bauteil, in aller Regel gegen eine Bremstrommel oder eine Bremsscheibe.

Ein üblicher Unterdruckbremskraftverstärker nutzt die Differenz zwischen dem Atmosphärendruck und einem künstlich - beispielsweise durch das Ansaugsystem eines Verbrennungsmotors - erzeugten Unterdruck zur Kraftverstärkung aus. In dem Bremskraftverstärker sind hierzu zwei Kammern vorgesehen, von denen die eine ständig mit einer Unterdruckquelle verbunden ist, während die andere mittels eines Steuerventils wahlweise mit Atmosphärendruck oder mit Unterdruck verbindbar ist. Die beiden Kammern, die meist als Arbeitskammer und als Unterdruckkammer bezeichnet werden, sind durch eine bewegliche Wand gasdicht voneinander getrennt. Die bewegliche Wand wird normalerweise durch eine Membran aus Elastomermaterial (z.B. aus Gummi) gebildet, die durch ein tellerförmiges Bauteil aus starrem Material gestützt ist. Zur Befestigung der beweglichen Wand auf dem Gehäuse des Steuerventils wird gemäß der schon genannten DE 44 08 993 A1 ein zylindrischer Kragen des die Gummimembran stützenden Tellers auf das Steuerventilgehäuse geschoben und dann bereichsweise durch radiales Verstemmen in eine Ringnut hinein verformt, die im Steuerventilgehäuse in dem von dem Kragen überdeckten Bereich vorhanden ist. Auf diese Weise erhält man eine formschlüssige Verbindung der beweglichen Wand mit dem Steuerventilgehäuse. In Kraftübertragungsrichtung liegt der stützende Teller an einer radialen Schulter des Steuerventilgehäuses an, so dass die an der beweglichen Wand durch den genannten Druckunterschied erzeugte Kraft auf das Steuerventilgehäuse übertragen und von letzterem an einen dem Bremskraftverstärker nachgeschalteten Hauptzylinder weitergeleitet werden kann.

Die Fertigung der genannten Ringnut des Steuerventilgehäuses, in die der Kragen des die Gummimembran stützenden Tellers zumindest bereichsweise radial verstemmt wird, ist werkzeugtechnisch relativ aufwendig. Insbesondere wenn das Steuerventilgehäuse im Spritzgussverfahren hergestellt wird, müssen - aufgrund der sich durch die Ringnut ergebenden Hinterschneidungen - in Querrichtung, d.h. quer zur Längsachse des Steuerventilgehäuses, verschiebbare Formelemente in der Spritzgussform vorhanden sein, damit das fertig gespritzte Steuerventilgehäuse entformt werden kann.

Die DE 30 07 532 A1 beschreibt einen gattungsbildenden Unterdruckbremskraftverstärker, der einen Membranteller zur Abstützung einer eine Arbeitskammer von einer Unterdruckkammer trennenden beweglichen Wand umfasst. In einer ersten Ausführungsform des aus der DE 30 07 532 A1 bekannten Unterdruckbremskraftverstärkers weist der Membranteller einen Nabenabschnitt mit sich radial nach innen erstreckenden Laschen auf. Diese Laschen ragen durch Einführschlitze, die in einer separat von einem Steuerventilgehäuse ausgebildeten Hülse vorgesehen sind, wobei ein einer Eingangsseite des Unterdruckbremskraftverstärkers zugewandtes Ende der Hülse einen radial nach außen ragenden Flansch des Steuerventilgehäuses hintergreift. In einer zweiten Ausführungsform des in der DE 30 07 532 A1 offenbarten Unterdruckbremskraftverstärkers sind an dem Nabenabschnitt des Membrantellers ausgebildete Laschen radial nach innen in Ausnehmungen eines Zwischenrings verformt. Der Zwischenring ist über radiale Stege mit dem Steuerventilgehäuse des Unterdruckbremskraftverstärkers verbunden.

Der Erfindung liegt die Aufgabe zugrunde, einen pneumatischen Bremskraftverstärker anzugeben, dessen Steuerventilgehäuse kostengünstiger herstellbar ist, ohne dass auf die durch einfaches Verstemmen des Membrantellers erreichte Befestigung der beweglichen Wand am Steuerventilgehäuse verzichtet werden muss. Des Weiteren soll das Steuerventilgehäuse des Bremskraftverstärkers, ebenfalls auf konstruktiv einfache Art und Weise, eine Befestigungsmöglichkeit für ein Halteelement aufweisen, das zur Positionierung eines Kraftausgangsstößels des Bremskraftverstärkers dient. Schließlich soll ein Verfahren bereitgestellt werden, das eine kostengünstige Herstellung eines Bremskraftverstärkers mit einem derartigen Steuerventilgehäuse ermöglicht.

Ausgehend von dem eingangs genannten Stand der Technik ist diese Aufgabe erfindungsgemäß durch einen Bremskraftverstärker gelöst, der die im Patentanspruch 1 angegebenen Merkmale aufweist. Demnach hat das Steuerventilgehäuse des erfindungsgemäßen Bremskraftverstärkers Ausnehmungen, die sich von der im Verstärkergehäuse befindlichen Stirnfläche des Steuerventilgehäuses bis in den Bereich erstrecken, der von dem Kragen des Tellers überdeckt ist. Radial sind diese Ausnehmungen so positioniert, dass die Wandung des Steuerventilgehäuses in dem vom Kragen überdeckten Bereich durch die Ausnehmungen unterbrochen ist, d.h. es entsteht in dem vom Kragen überdeckten Abschnitt des Steuerventilgehäuses durch jede Ausnehmung eine auch als Verstemmfenster bezeichnete Öffnung, in die hinein der Kragen radial verformt werden kann, beispielsweise durch Verstemmen. Vorzugsweise erstrecken sich die Ausnehmungen im Steuerventilgehäuse in axialer Richtung parallel zu dessen Längsachse. Alternativ können die Ausnehmungen sich auch schräg zur Längsachse des Steuerventilgehäuses erstrecken, sicherzustellen ist lediglich, dass durch jede Ausnehmung eine Öffnung im vom Kragen überdeckten Bereich des Steuerventilgehäuses geschaffen wird.

Da die genannten Ausnehmungen im Steuerventilgehäuse erfindungsgemäß von dessen einer Stirnseite aus gefertigt werden können, entfallen die beim Stand der Technik erforderlichen querverschieblichen Elemente, so dass jetzt mehrere sogenannte Formnester, d.h. mehrere Spritzgussformen für Steuerventilgehäuse, in einem einzigen Werkzeug nebeneinander angeordnet sein können. Bisher war dies bei vertretbarem Platzaufwand nicht möglich, da die querverschieblichen Elemente zuviel Raum beanspruchten. Erfindungsgemäß lassen sich also mit nur einem Werkzeug und entsprechend geringem Platzbedarf mehrere Steuerventilgehäuse gleichzeitig herstellen, wodurch die Produktionskosten entscheidend gesenkt werden.

Des Weiteren sind in den Ausnehmungen, durch einen radial außenliegenden Bereich derselben, an der im Verstärkergehäuse angeordneten Stirnseite des Steuerventilgehäuses Hinterschneidungen für Federarme eines Halteelementes gebildet, das zur Positionierung eines Kraftausgangsstößels des Bremskraftverstärkers dient. Diese Hinterschneidungen sind aus Richtung der anderen, d.h. der außerhalb des Verstärkergehäuses angeordneten Stirnseite des Steuerventilgehäuses zugänglich, insbesondere in einer zur Längsachse des Steuerventilgehäuses parallelen Richtung. Das bedeutet, dass die Hinterschneidungen von der anderen Stirnseite des Steuerventilgehäuses aus gefertigt werden können, so dass zu ihrer Herstellung ebenfalls keine querverschieblichen Elemente im Fertigungswerkzeug benötigt werden.

Das bereits erwähnte Halteelement, welches den Kraftausgangsstößel des Bremskraftverstärkers am Steuerventilgehäuse positionieren soll, weist Federarme auf, die vorzugsweise so ausgebildet sind, dass das Halteelement von der im Verstärkergehäuse angeordneten Stirnseite des Steuerventilgehäuses in letzteres einführbar ist, wobei die Federarme dann hinter den durch die Ausnehmungen gebildeten Hinterschneidungen verrasten. Die Federarme werden also beim Einführvorgang etwas zusammengedrückt und federn wieder auseinander, sobald das Halteelement soweit in das Steuerventilgehäuse eingeführt worden ist, dass die Federarme in den durch die Hinterschneidungen gebildeten, durchmessergrößeren Bereich schnappen können. Ein Herausziehen des Halteelementes aus dem Steuerventilgehäuse ist dann nicht mehr möglich, weil die Federarme sich an den Hinterschneidungen abstützen. Das hierin beschriebene Halteelement mit seinen Federarmen, die im Steuerventilgehäuse verrasten, kann mit Vorteil auch unabhängig von den erfindungsgemäßen Ausnehmungen verwendet werden. Geeignete Hinterschneidungen im Steuerventilgehäuse müssen dann auf eine andere Weise bereitgestellt werden.

Die vorliegende Erfindung stellt auch ein Verfahren zur Herstellung eines erfindungsgemäßen Bremskraftverstärkers bereit, bei dem die zuvor beschriebenen Ausnehmungen im Steuerventilgehäuse auf vorteilhafte Weise dadurch erzeugt werden, dass mehrere in Umfangsrichtung voneinander beabstandete erste Schieber in eine Spritzgussform für das Steuerventilgehäuse von der im Verstärkergehäuse anzuordnenden Stirnseite des Steuerventilgehäuses aus parallel zu dessen Längsachse derart eingeführt werden, dass diese ersten Schieber in dem Bereich des Steuerventilgehäuses, der später von dem Kragen des Tellers überdeckt ist, an die Oberfläche des Steuerventilgehäuses treten. Mit anderen Worten: Die ersten Schieber füllen die Spritzgussform für das Steuerventilgehäuse an einigen Stellen desjenigen Abschnittes des Steuerventilgehäuses aus, der später vom Kragen des Tellers überdeckt sein wird, so dass an diese Stellen kein Material fließen kann. Des weiteren wird in Gegenrichtung zu jedem ersten Schieber ein radial außerhalb des ersten Schiebers angeordneter zweiter Schieber auf dem zugehörigen ersten Schieber gleitend in die Spritzgussform soweit eingeführt, dass zwischen seinem freien Ende und der im Verstärkergehäuse anzuordnenden Stirnseite des Steuerventilgehäuses ein vorgegebener Abstand verbleibt. Sodann wird das Steuerventilgehäuse spritzgegossen, wobei der zuvor erwähnte, vorgegebene Abstand durch das gespritzte Material ausgefüllt wird, wodurch in den durch die ersten Schieber gebildeten und durch die zweiten Schieber vergrößerten Ausnehmungen jeweils eine Hinterschneidung entsteht. Nach ausreichendem Abkühlen des gespritzten Materials werden die Schieber aus der Spritzgussform herausgezogen. Die zum radialen Verstemmen des Kragens gewünschten Öffnungen und auch die genannten Hinterschneidungen lassen sich auf diese Weise äußerst einfach und ohne platzraubende querverschiebliche Elemente am Formwerkzeug fertigen.

Vorzugsweise werden bei dem erfindungsgemäßen Verfahren alle ersten Schieber gemeinsam manipuliert, d.h. eingeführt und herausgezogen, beispielsweise indem alle ersten Schieber an einem gemeinsamen Halter befestigt sind.

Bei dem erfindungsgemäßen Verfahren können die ersten und/oder die zweiten Schieber plan oder zylindersegmentförmig gekrümmt sein. Wenn die Schieber plan sind, entscheidet ihre Dicke und radiale Positionierung darüber, wie weit die in der Mantelfläche des Steuerventilgehäuses entstehenden Öffnungen sich in Umfangsrichtung erstrecken. Wenn die Schieber zylindersegmentförmig gekrümmt sind, entspricht deren Krümmung der des Steuerventilgehäuses, so daß die Dicke der Schieber keinen Einfluß auf die Erstreckung der sich ergebenden Öffnungen in Umfangsrichtung hat.

Da die radiale Erstreckung der Hinterschneidungen für die Federarme des genannten Halteelementes nicht groß zu sein braucht, sind vorzugsweise die zweiten Schieber, deren Dicke die radiale Erstreckung der Hinterschneidungen bestimmt, dünner als die ersten Schieber.

Ein bevorzugtes Ausführungsbeispiel eines erfindungsgemäßen Bremskraftverstärkers wird anhand der beigefügten, schematischen Figuren näher erläutert. Es zeigt:
- Fig. 1: einen Längsschnitt durch den im Rahmen der vorliegenden Erfindung interessierenden Teil eines erfindungsgemäßen Bremskraftverstärkers,
- Fig. 2: einen Ausschnitt aus Fig. 1 in vergrößerter Darstellung, und
- Fig. 3.: eine der Fig. 2 ähnliche Darstellung in nochmals vergrößertem Maßstab zur Erläuterung des erfindungsgemäßen Herstellungsverfahrens.

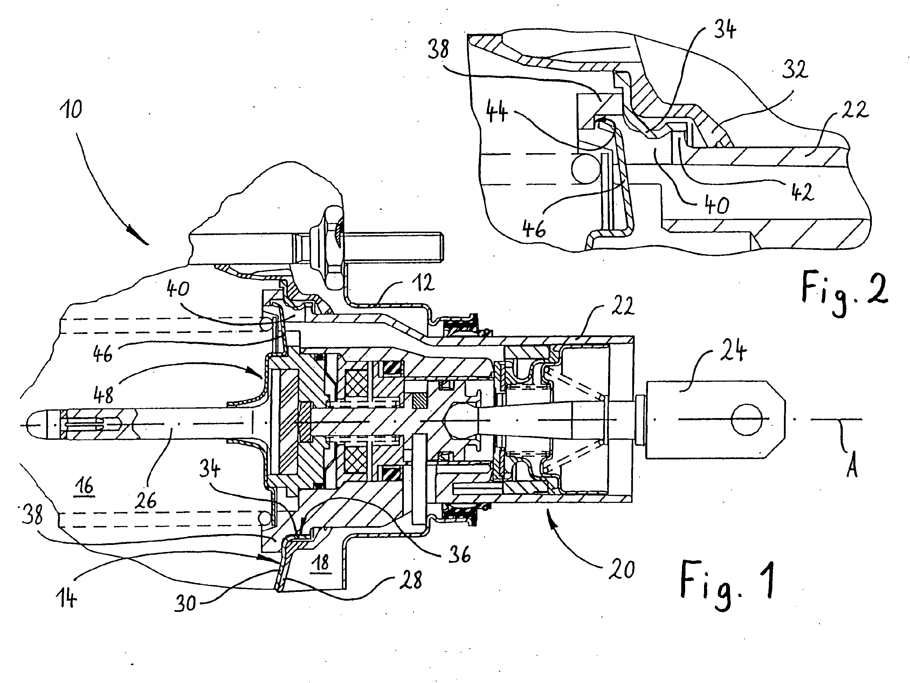

In Fig. 1 ist ein Teil eines allgemein mit 10 bezeichneten Unterdruckbremskraftverstärkers im Längsschnitt dargestellt. Der Bremskraftverstärker 10 weist in üblicher Weise ein schalenförmiges Gehäuse 12 auf, dessen Innenraum durch eine bewegliche Wand 14 in eine Unterdruckkammer 16 und eine Arbeitskammer 18 unterteilt ist.

Im Betrieb des Bremskraftverstärkers 10 steht die Unterdruckkammer 16 ständig mit einer Unterdruckquelle in Verbindung, beispielsweise mit dem Ansaugtrakt eines Verbrennungsmotors oder mit einer Unterdruckpumpe. Ein Steuerventil 20 mit einem Gehäuse 22 ermöglicht es, wahlweise eine Verbindung der Arbeitskammer 18 mit der Unterdruckkammer 16 oder der Arbeitskammer 18 mit der Umgebungsatmosphäre herzustellen, um einerseits die Arbeitskammer 18 evakuieren zu können und andererseits Umgebungsdruck in die evakuierte Arbeitskammer 18 einströmen lassen zu können. Die bewegliche Wand 14 ist kraftübertragend mit dem Steuerventilgehäuse 22 verbunden, worauf im folgenden noch näher eingegangen werden wird.

Der Bremskraftverstärker 10 wird mittels eines stangenförmigen, federnd in seine Ausgangsstellung vorgespannten Eingangsgliedes 24 betätigt, das längs einer Achse A, die gleichzeitig die Mittellängsachse des Steuerventilgehäuses 22 ist, in das Steuerventilgehäuse 22 ragt. Durch Einleiten von Atmosphärendruck in die evakuierte Arbeitskammer 18 entsteht an der beweglichen Wand 14 eine Druckdifferenz, aus der - multipliziert mit der wirksamen Fläche der beweglichen Wand 14 - eine Kraft resultiert, welche von der beweglichen Wand 14 auf das Steuerventilgehäuse 22 und von letzterem auf einen Kraftausgangsstößel 26 übertragen wird. Der Kraftausgangsstößel 26 leitet die Kraft weiter an einen hier nicht dargestellten, dem Bremskraftverstärker 10 funktionell nachgeschalteten Hauptzylinder einer hydraulischen Fahrzeugbremsanlage. Der konstruktive Aufbau und die Funktion eines solchen Bremskraftverstärkers 10 sind Fachleuten auf diesem Gebiet wohlbekannt und brauchen deshalb nicht weiter erläutert zu werden.

Die bewegliche Wand 14 besteht üblicherweise aus einer Membran 28 aus gummielastischem Material und einem diese Membran 28 stützenden Teller 30 aus starrem Material, der meist aus Blech gefertigt ist. An ihrem radial äußeren Rand ist die gummielastische Membran 28 zwischen zwei schalenförmigen Bauteilen des Verstärkergehäuses 12 abdichtend eingespannt (hier nicht dargestellt). Der radial innere Rand der Membran 28 ist durch eine umlaufende Dichtlippe 32 gebildet, die die bewegliche Wand 14 gegen das Steuerventilgehäuse 22 abdichtet.

Zur Befestigung der beweglichen Wand 14 auf dem Steuerventilgehäuse 22 ist der Teller 30 radial innen mit einem hohlzylindrischen Kragen 34 versehen, der auf das Steuerventilgehäuse 22 aufgeschoben wird, bis er auf einem Abschnitt 36 des Steuerventilgehäuses 22 zu liegen kommt, dessen Außendurchmesser im wesentlichen dem Innendurchmesser des Kragens 34 entspricht. Der Abschnitt 36 bildet demnach einen Führungsdurchmesser dₛ zur Aufnahme und Positionierung des Tellers 30. In der genannten Position liegt der Teller 30 an einer radial nach außen wegstehenden Schulter 38 des Steuerventilgehäuses 22 an, so daß die bei Vorhandensein der Druckdifferenz von der beweglichen Wand 14 ausgeübte Kraft gut auf das Steuerventilgehäuse 22 übertragen werden kann.

Um eine formschlüssige Verbindung zwischen der beweglichen Wand 14 und dem Steuerventilgehäuse 22 zu erreichen, ist der Kragen 34, nachdem er in die vorgenannte Position gebracht worden ist, durch einen Verstemmvorgang radial in Ausnehmungen 40 hinein verformt (siehe insbesondere Fig. 2). Mehrere dieser Ausnehmungen 40, von denen in den Figuren nur eine gezeigt ist, sind über den Umfang des Steuerventilgehäuses 22 verteilt in dem Abschnitt 36 angeordnet, der von dem Kragen 34 des Tellers 30 überdeckt wird. Jede Ausnehmung 40 erstreckt sich axial von der im Verstärkergehäuse 12 angeordneten Stirnseite des Steuerventilgehäuses 22 parallel zur Achse A bis in den Abschnitt 36 des Steuerventilgehäuses 22, ohne den Abschnitt 36 jedoch vollständig zu durchsetzen. Auf diese Weise bleibt im Bereich der Ausnehmungen 40 ein Steg 42 stehen, an dem sich der radial in die entsprechende Ausnehmung 40 verformte Teil des Kragens 34 abstützen kann. Jede Ausnehmung 40 erzeugt somit in der Mantelfläche des Abschnitts 36 des Steuerventilgehäuses 22 ein sich axial und in Umfangsrichtung erstreckendes Verstemmfenster. Mindestens zwei solche Verstemmfenster sollten für einen sicheren Sitz der beweglichen Wand 14 auf dem Steuerventilgehäuse 22 vorhanden sein, besser sind jedoch drei oder vier Verstemmfenster vorgesehen.

In dem gezeigten Ausführungsbeispiel weisen die Ausnehmungen 40 zusätzlich jeweils eine Hinterschneidung 44 auf. Diese Hinterschneidungen 44, die aus Richtung der außerhalb des Verstärkergehäuses 12 angeordneten Stirnseite des Steuerventilgehäuses 22 längs einer Achsparallelen zur Achse A zugänglich sind, dienen als Widerlager für die freien Enden von Federarmen 46 eines Halteelementes 48, das den Kraftausgangsstößel 26 am Steuerventil 20 positioniert. Genauer gesagt hält das Halteelement 48 den Kraftausgangstößel 26 koaxial zur Achse A, um dadurch das spätere Einführen des kugeligen Endes des Kraftausgangstößels 26 in den hier nicht dargestellten Hauptzylinder zu vereinfachen. Beim Einführen des Halteelementes 48, das beispielsweise als Stanzteil aus einem Federstahl gefertigt sein kann, werden die Federarme 46, von denen in den Figuren nur einer gezeigt ist, in Richtung auf die Achse A zusammengedrückt, so daß das freie Ende jedes Federarms 46 unter dem durch jede Hinterschneidung 44 gebildeten Materialvorsprung des Steuerventilgehäuses 22 durchrutschen kann. Sobald ein Federarm 46 in den durch die Hinterschneidung 44 vergrößerten Bereich der Ausnehmung 40 gelangt, federt er zurück in die in den Figuren 1 und 2 gezeigte Stellung, wodurch sein freies Ende hinter die Hinterschneidung 44 springt. Wie dargestellt, ist das freie Ende jedes Federarmes 46 zur Hinterschneidung 44 hin abgewinkelt, so daß die Federarme 46 ein in das Steuerventilgehäuse 22 eingeführtes Halteelement 48 nach Art von Widerhaken im Steuerventilgehäuse 22 festhalten.

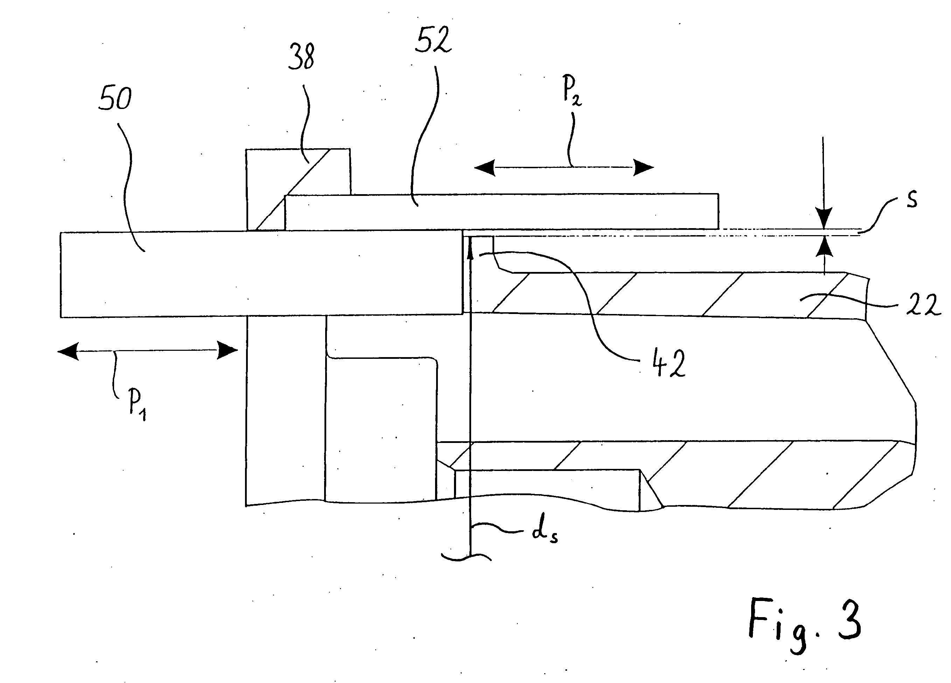

In Fig. 3 ist gezeigt, wie sich die Ausnehmungen 40 und Hinterschneidungen 44 mittels zweier Axialschieber 50 und 52 einfach fertigen lassen. Ein erster, gemäß dem Doppelpfeil P₁ axial beweglicher Schieber 50 wird von der im Verstärkergehäuse 12 anzuordnenden Stirnseite des Steuerventilgehäuses 22 aus in die Spritzgußform zur Herstellung des Steuerventilgehäuses 22 parallel zur Achse A soweit in den Abschnitt 36 des Steuerventilgehäuses 22 hineingefahren, daß sich der Steg 42 bilden kann. In radialer Richtung muß der erste Schieber 50 dabei so positioniert sein, daß seine radial äußere Fläche um ein vorgegebenes Maß s außerhalb des durch den Abschnitt 36 gebildeten Führungsdurchmessers dₛ zu liegen kommt. Nur dann ist sichergestellt, daß sich das gewünschte Verstemmfenster im Abschnitt 36 bildet. Der erste Schieber 50 kann eine ebene Gestalt haben. Die Umfangserstreckung des Verstemmfensters hängt dann von dem Maß s ab, um das der erste Schieber 50 den Abschnitt 36 in radialer Richtung maximal überragt. Je größer der maximale Überstand des Schiebers 50 in radialer Richtung ist, desto weiter erstreckt sich das durch den ersten Schieber 50 gebildete Verstemmfenster in Umfangsrichtung.

Der erste Schieber 50 kann jedoch auch eine zylindersegmentförmige Gestalt haben, wobei die zylindrische Krümmung des Schiebers 50 der zylindrischen Krümmung des Abschnitts 36 des Steuerventilgehäuses 22 entspricht. Die Größe eines durch einen solchen zylindersegmentförmigen Schieber 50 gebildeten Verstemmfensters in Umfangsrichtung hängt dann lediglich von der Erstreckung des Schiebers 50 in Umfangsrichtung ab, während das Maß s diesbezüglich nicht entscheidend ist. Sicherzustellen ist lediglich, daß der Schieber 50 den Abschnitt 36 radial etwas überragt.

Zur Ausbildung der Hinterschneidung 44 wird ein zweiter Axialschieber 52 in Gegenrichtung in die Spritzgußform eingeführt, also von der außerhalb des Verstärkergehäuses 12 anzuordnenden Stirnseite des Steuerventilgehäuses 22 aus. Auch der zweite Schieber 52 wird, wie durch den Doppelpfeil P₂ angegeben, parallel zur Achse A bewegt, derart, daß er auf dem ersten Schieber 50 gleitet. Damit sich die Hinterschneidung 44 ausbilden kann, darf der zweite Schieber 52 nicht bis zur im Verstärkergehäuse 12 anzuordnenden Stirnseite des Steuerventilgehäuses 22 eingeführt werden.

Nachdem die ersten Schieber 50 und die zweiten Schieber 52 wie in Fig. 3 dargestellt positioniert sind, kann der Spritzgießvorgang erfolgen und es bilden sich die gewünschten Ausnehmungen 40 mit Verstemmfenstern und Hinterschneidungen 44 aus. Nach dem Spritzgießvorgang werden die Schieber 50 und 52 axial aus der Spritzgußform herausgezogen und das erzeugte Steuerventilgehäuse 22 kann problemlos entformt werden. Querverschiebliche Elemente sind nicht erforderlich, weshalb mehrere sogenannte Formnester für Steuerventilgehäuse 22 nebeneinander auf einem Spritzgußwerkzeug angeordnet werden können, was die Herstellungskosten senkt.

Vorzugsweise haben die Schieber 50 und 52 gleiche Gestalt, d.h. wenn die ersten Schieber 50 eine ebene Form haben, sind auch die zweiten Schieber 52 eben. Es kann jedoch auch ein zylindersegmentförmiger erster Schieber 50 mit einem planen zweiten Schieber 52 kombiniert werden, da die Hinterschneidung 44 sich in Umfangsrichtung nicht über die gesamte Länge der Ausnehmung 40 zu erstrecken braucht.

## Patentansprüche

1. Pneumatischer Bremskraftverstärker (10), insbesondere für Kraftfahrzeuge, mit einem Verstärkergehäuse (12), dessen Innenraum durch zumindest eine bewegliche Wand (14) in eine Unterdruckkammer (16) und eine Arbeitskammer (18) unterteilt ist, und mit einem längs einer Achse (A) in das Verstärkergehäuse (12) ragenden Steuerventil (20) zum Steuern einer auf die bewegliche Wand (14) einwirkenden pneumatischen Druckdifferenz, das ein im wesentlichen zylindrisches Steuerventilgehäuse (22) aufweist, mit dessen Außenseite die bewegliche Wand (14) kraftübertragend verbunden ist, indem ein Kragen (34) eines der beweglichen Wand (14) zugehörigen Tellers (30) längs seines Umfangs zumindest bereichsweise radial in das Steuerventilgehäuse (22) hinein verformt, insbesondere verstemmt, ist,
**dadurch gekennzeichnet, dass**
- in einem von dem Kragen (34) des Tellers (30) überdeckten Abschnitt (36) des Steuerventilgehäuses (22) mehrere in Umfangsrichtung voneinander beabstandete Ausnehmungen (40) vorhanden sind, in die hinein der Kragen (34) des Tellers (30) radial verformt ist,
- die Ausnehmungen (40) von der im Verstärkergehäuse (12) angeordneten Stirnseite des Steuerventilgehäuses (22) zugänglich sind, insbesondere längs einer zur Achse (A) parallelen Richtung,
- die Ausnehmungen (40) an der im Verstärkergehäuse (12) angeordneten Stirnseite des Steuerventilgehäuses (22) radiale Hinterschneidungen (44) für Federarme (46) eines Halteelementes (48) bilden, das zur Positionierung eines Kraftausgangsstößels (26) des Bremskraftverstärkers dient, und dass
- die Hinterschneidungen (44) aus Richtung der außerhalb des Verstärkergehäuses (12) angeordneten Stirnseite des Steuerventilgehäuses (22) zugänglich sind, insbesondere längs einer zur Achse (A) parallelen Richtung.

2. Bremskraftverstärker nach Anspruch 1,
**dadurch gekennzeichnet, dass** die Federarme (46) des Halteelementes (48) zur Positionierung des Kraftausgangsstößels (26) des Bremskraftverstärkers so ausgebildet sind, dass das Halteelement (48) von der im Verstärkergehäuse (12) angeordneten Stirnseite des Steuerventilgehäuses (22) in letzteres einführbar ist, wobei die Federarme (46) hinter den Hinterschneidungen (44) verrasten.

3. Verfahren zur Herstellung eines pneumatischen Bremskraftverstärkers, insbesondere für Kraftfahrzeuge, wobei der Bremskraftverstärker aufweist
- ein Verstärkergehäuse (12), dessen Innenraum durch zumindest eine bewegliche Wand (14) in eine Unterdruckkammer (16) und eine Arbeitskammer (18) unterteilt ist, und
- ein längs einer Achse (A) in das Verstärkergehäuse (12) ragendes Steuerventil (20) zum Steuern einer auf die bewegliche Wand (14) einwirkenden pneumatischen Druckdifferenz mit einem im wesentlichen zylindrischen Steuerventilgehäuse (22), mit dessen Außenseite die bewegliche Wand (14) kraftübertragend verbunden ist, indem ein Kragen (34) eines der beweglichen Wand (14) zugehörigen Tellers (30) längs seines Umfangs zumindest bereichsweise radial in das Steuerventilgehäuse (22) hinein verformt, insbesondere verstemmt, ist,
**gekennzeichnet durch** die Schritte
- Einführen mehrerer in Umfangsrichtung voneinander beabstandeter erster Schieber (50) in eine Spritzgussform für das Steuerventilgehäuse (22) von der im Verstärkergehäuse (12) anzuordnenden Stirnseite des Steuerventilgehäuses (22) parallel zur Achse (A) derart, dass die ersten Schieber (50) in einem Abschnitt (36) des Steuerventilgehäuses (22), der später von dem Kragen (34) des Tellers (30) überdeckt ist, an die Oberfläche des Steuerventilgehäuses (22) treten, wobei in Gegenrichtung zu jedem ersten Schieber (50) ein radial außerhalb des ersten Schiebers (50) angeordneter zweiter Schieber (52) auf dem zugehörigen ersten Schieber (50) gleitend in die Spritzgussform für das Steuerventilgehäuse (22) soweit eingeführt wird, dass zwischen seinem freien Ende und der im Verstärkergehäuse (12) anzuordnenden Stirnseite des Steuerventilgehäuses (22) ein vorgegebener Abstand verbleibt,
- Spritzgießen des Steuerventilgehäuses (22), und
- Herausziehen der ersten Schieber (50) aus der Spritzgussform.

4. Verfahren nach Anspruch 3,
**dadurch gekennzeichnet, dass** alle ersten Schieber (50) gemeinsam manipuliert werden.

5. Verfahren nach Anspruch 3 oder 4,
**dadurch gekennzeichnet, dass** die zweiten Schieber (52) dünner als die ersten Schieber (50) sind.

6. Verfahren nach einem der Ansprüche 3 bis 5,
**dadurch gekennzeichnet, dass** die ersten und/oder die zweiten Schieber (50, 52) plan sind.

7. Verfahren nach einem der Ansprüche 3 bis 6,
**dadurch gekennzeichnet, dass** die ersten und/oder die zweiten Schieber (50, 52) zylindersegmentförmig gekrümmt sind.

## Claims

1. Pneumatic brake booster (10), in particular for motor vehicles, having a booster housing (12), the interior of which is subdivided by at least one movable wall (14) into a vacuum chamber (16) and a working chamber (18), and having a control valve (20) for controlling a pneumatic pressure difference acting upon the movable wall (14), which control valve projects along an axis (A) into the booster housing (12) and comprises a substantially cylindrical control valve housing (22), to the outside of which the movable wall (14) is workingly connected in that a collar (34) of a plate (30) associated with the movable wall (14) is deformed, in particular caulked, along its periphery at least in sections radially into the control valve housing (22),
**characterized in that**
- in a portion (36) of the control valve housing (22) overlapped by the collar (34) of the plate (30) a plurality of recesses (40) are provided, which are spaced apart from one another in peripheral direction and into which the collar (34) of the plate (30) is radially deformed,
- the recesses (40) are accessible from the end of the control valve housing (22) disposed in the booster housing (12), in particular along a direction parallel to the axis (A),
- the recesses (40) at the end of the control valve housing (22) disposed in the booster housing (12) form radial undercuts (44) for spring arms (46) of a retaining element (48), which is used to position a force output tappet (26) of the brake booster, and that
- the undercuts (44) are accessible from the direction of the end of the control valve housing (22) disposed outside of the booster housing (12), in particular along a direction parallel to the axis (A).

2. Brake booster according to claim 1,
**characterized in that** the spring arms (46) of the retaining element (48) for positioning the force output tappet (26) of the brake booster are designed in such a way that the retaining element (48) is introducible into the control valve housing (22) from the end of the latter disposed in the booster housing (12), wherein the spring arms (46) latch behind the undercuts (44).

3. Method of manufacturing a pneumatic brake booster, in particular for motor vehicles, the brake booster comprising
- a booster housing (12), the interior of which is subdivided by at least one movable wall (14) into a vacuum chamber (16) and a working chamber (18), and
- a control valve (20), which projects along an axis (A) into the booster housing (12), for controlling a pneumatic pressure difference acting upon the movable wall (14) by means of a substantially cylindrical control valve housing (22), to the outside of which the movable wall (14) is workingly connected, in that a collar (34) of a plate (30) associated with the movable wall (14) is deformed, in particular caulked, along its periphery at least in sections radially into the control valve housing (22),
**characterized by** the steps of
- introducing a plurality of first slide bars (50), which are spaced apart from one another in peripheral direction, into an injection mould for the control valve housing (22) from the end of the control valve housing (22), which is to be disposed in the booster housing (12), parallel to the axis (A) in such a way that the first slide bars (50) in a portion (36) of the control valve housing (22) subsequently overlapped by the collar (34) of the plate (30) take the place of the surface of the control valve housing (22), wherein in the opposite direction to each first slide bar (50) a second slide bar (52), which is disposed radially outside of the first slide bar (50), is slid along the associated first slide bar (50) and introduced into the injection mould for the control valve housing (22) to such an extent that between its free end and the end of the control valve housing (22) to be disposed in the booster housing (12) a defined gap remains
- injection moulding the control valve housing (22), and
- pulling the first slide bars (50) out of the injection mould.

4. Method according to claim 3,
**characterized in that** all of the first slide bars (50) are manipulated jointly.

5. Method according to claim 3 or 4,
**characterized in that** the second slide bars (52) are thinner than the first slide bars (50).

6. Method according to one of claims 3 to 5,
**characterized in that** the first and/or the second slide bars (50, 52) are flat.

7. Method according to one of claims 3 to 6,
**characterized in that** the first and/or second slide bars (50, 52) are curved in the shape of a cylinder segment.

## Revendications

1. Servofrein pneumatique (10), en particulier pour des véhicules à moteur, comportant un boîtier (12) du servofrein, dont le volume intérieur est subdivisé par au moins une paroi mobile (14) en une chambre de dépression (16) et une chambre de travail (18), et une soupape de commande (20) destinée à réguler la différence de pression pneumatique qui agit sur la paroi mobile (14), laquelle soupape s'engage le long d'un axe (A) dans le boîtier (12) du servofrein, la soupape de commande comportant un boîtier de soupape de commande (22) sensiblement cylindrique, la paroi mobile (14) étant reliée à la face extérieure de ce dernier de manière à transmettre les efforts, tandis qu'une collerette (34) d'un plateau (30) associé à la paroi mobile (14) est déformée sur son pourtour, au moins par zones, radialement vers l'intérieur du boîtier de soupape de commande (22), plus particulièrement rabattue,
**caractérisé en ce que**,
- une partie (36) du boîtier de soupape de commande (22), recouverte par la collerette (34) du plateau (30), comporte plusieurs évidements (40) espacés les uns des autres dans le sens périphérique, vers l'intérieur desquels la collerette (34) du plateau (30) a été déformée dans le sens radial,
- les évidements (40) sont accessibles depuis la face frontale du boîtier de soupape de commande (22), agencée dans le boîtier (12) du servofrein, en particulier suivant une direction parallèle à l'axe (A),
- les évidements (40) à la face frontale du boîtier de soupape de commande (22), agencée dans le boîtier (12) du servofrein, forment des contre-dépouilles (44) radiales pour des bras de ressort (46) d'un élément de fixation (48) assurant le positionnement d'un poussoir de sortie (26) du servofrein et **en ce que**,
- les contre-dépouilles (44) sont accessibles à partir de la face frontale du boîtier de soupape de commande (22), agencée à l'extérieur du boîtier (12) du servofrein, en particulier suivant une direction parallèle à l'axe (A).

2. Servofrein selon la revendication 1, **caractérisé en ce que** les bras de ressort (46) de l'élément de fixation (48) destiné au positionnement du poussoir de sortie (26) du servofrein, sont conçus de telle sorte que l'élément de fixation (48) peut être engagé dans le boîtier de soupape de commande (22), à partir de la face frontale dudit boîtier de soupape, agencée dans le boîtier (12) du servofrein, les bras de ressort (46) venant en butée derrière les contre-dépouilles (44).

3. Procédé de réalisation d'un servofrein pneumatique, en particulier pour un véhicule à moteur, le servofrein comportant
- un boîtier (12) dont le volume intérieur est subdivisé par au moins une paroi mobile (14), en une chambre de dépression (16) et une chambre de travail (18), et
- une soupape de commande (20) destinée à réguler la différence de pression pneumatique qui agit sur la paroi mobile (14), laquelle soupape s'engage le long d'un axe (A) dans le boîtier (12) du servofrein et comporte un boîtier de soupape de commande (22) sensiblement cylindrique, la paroi mobile (14) étant reliée à la face extérieure de ce dernier de manière à transmettre les efforts, tandis qu'une collerette (34) d'un plateau (30) associé à la paroi mobile (14) est déformée sur son pourtour, au moins par zones, radialement vers l'intérieur du boîtier de soupape de commande (22), plus particulièrement rabattue,
**caractérisé par** les étapes :
- introduction de plusieurs premiers tiroirs (50), disposés à distance les uns des autres dans la direction périphérique, dans un moule d'injection pour le boîtier de soupape de commande (22), depuis la face frontale du boîtier de soupape de commande (22) à agencer dans le boîtier (12) du servofrein, parallèlement à l'axe (A), de telle sorte que les premiers tiroirs (50) parviennent à la surface du boîtier de soupape de commande (22) dans une partie (36) du boîtier de soupape de commande (22) qui sera ultérieurement recouverte par la collerette (34) du plateau (30), un deuxième tiroir (52), situé radialement à l'extérieur du premier tiroir (50) étant introduit dans le sens opposé à chaque premier tiroir (50) en glissant sur le premier tiroir (50) correspondant, dans le moule d'injection pour le boîtier de soupape de commande (22) jusqu'à ce qu'il subsiste un intervalle prédéfini entre son extrémité libre et la face frontale du boîtier de soupape de commande (22), à agencer dans le boîtier (12) du servofrein,
- moulage par injection du boîtier de soupape de commande (22), et
- extraction du premier tiroir (50) du moule d'injection.

4. Procédé selon la revendication 3, **caractérisé en ce que** tous les premiers tiroirs (50) sont manoeuvrés ensemble.

5. Procédé selon la revendication 3 ou 4, **caractérisé en ce que** les deuxièmes tiroirs (52) sont plus minces que les premiers tiroirs (50).

6. Procédé selon l'une quelconque des revendications 3 à 5, **caractérisé en ce que** les premiers et/ou les deuxièmes tiroirs (50, 52) sont plans.

7. Procédé selon l'une quelconque des revendications 3 à 6, **caractérisé en ce que** les premiers et/ou les deuxièmes tiroirs (50, 52) sont cintrés en forme de segment cylindrique.
